# EUROPEAN PATENT APPLICATION

(11) **EP 2 154 463 A1**
(43) Date of publication of application: **17.02.2010**
(21) Application number: 07828128.4
(22) Date of filing: 31.05.2007
(51) Int. Cl.: F28F 3/08, F28D 9/00

(54) **HEAT EXCHANGER ELEMENT, PROCESS FOR MANUFACTURING THE SAME, AND HEAT EXCHANGE VENTILATION APPARATUS**

(71) Applicant: Mitsubishi Electric Corporation, Chiyoda-ku Tokyo 100-8310 (JP)
(72) Inventor: ARAI, Hidemoto, Tokyo 100-8310 (JP); TAKADA, Masaru, Tokyo 100-8310 (JP); IMAI, Takanori, Tokyo 100-8310 (JP); SUGIYAMA, Youichi, Tokyo 100-8310 (JP)
(74) Representative: Hopkin, Tobias J.B.
(86) International application number: PCT/JP2007/061096
(87) International publication number: WO 2008/146387

(57) **Abstract**

A heat exchange element according to the present invention has a stacked-layer structure in which sheet-like partition members and spacing members are stacked alternately, while the spacing members are joined with the partition members so as to form air flow passages together with the partition members. A plurality of adhesive layers included in the stacked-layer structure i.e., the plurality of adhesive layers that cause the partition members to be each joined with a corresponding one of the spacing members include one or more colored adhesive layers. It is therefore easy to manufacture a heat exchange element having a desired color arrangement at a low cost, regardless of the type of the heat exchange element.

## Description

### TECHNICAL FIELD

The present invention relates to a heat exchange element used in an air-conditioning apparatus such as a heat exchange ventilator, a manufacturing method thereof, and a heat exchange ventilator.

### BACKGROUND ART

Heat exchange elements used in air-conditioning apparatuses such as heat exchange ventilators can be roughly divided into a cross-flow type and a countercurrent type. For both of these types, a heat exchange element is manufactured by stacking, in the manner of layers, a plurality of element structuring units each of which includes, for example, a sheet-like partition member and, for example, a corrugated spacing member that is joined with the partition member so as to form an air flow passage together with the partition member. In a heat exchange element of the cross-flow type, the flow passages formed by the element structuring units that are positioned adjacent to each other in the layer stacking direction are substantially orthogonal to each other. In a heat exchange element of the countercurrent type, the flow passages formed by the element structuring units that are positioned adjacent to each other in the layer stacking direction are substantially parallel to each other.

No matter whether a heat exchange element is of the cross-flow type or the countercurrent type, for the purpose of improving heat exchange efficiency, it is desirable to perform a heat exchanging process on both sensible heat and latent heat, rather than only on sensible heat. For this reason, total heat exchange elements that perform a heat exchanging process on both sensible heat and latent heat have been developed in recent years, in addition to sensible heat exchange elements that perform a heat exchanging process only on sensible heat. The partition members included in a total heat exchange element function not only as a medium in the sensible heat exchanging process but also as a medium in the latent heat exchanging process. Heat conductivity and moisture permeability of the partition members have a great impact on the heat exchange efficiency of the element as a whole. Thus, in many situations, chemicals such as a moisture permeable agent and/or a moisture absorbent are added to the partition members to enhance the moisture permeability thereof, before the element structuring units are manufactured. For instance, before the element structuring units are manufactured, a moisture absorbent that can be selected out of the following examples is added to the partition members: a water-soluble moisture absorbent, e.g., an alkali metal salt such as lithium chloride or an alkali metal salt such as calcium chloride; and a non-water-soluble moisture absorbent, e.g., granular solids of silica gel, a strongly acidic ion-exchange resin, or a strongly basic ion-exchange resin.

Further, in both the cross-flow-type heat exchange elements and the coutercurrent-type heat exchange elements, an adhesive is often used to join the partition members and the spacing members together. A water-solvent-type adhesive or an organic-solvent-type adhesive that becomes colorless and transparent after being hardened is used. In the case where an organic-solvent-type adhesive is used, for example, the organic solvent is emitted from the heat exchange element, and also, a bad odor is released from the heat exchange element. Thus, a water-solvent-type adhesive is used in many situations, especially for a heat exchange element included in an air-conditioning apparatus.

Heat exchange elements may be colored as necessary. For example, as described in Patent Documents 1 to 3, by coloring the paper used as a material of partition members and/or spacing members, or by coloring the coating used in a process of applying moisture releasing/absorbing powder onto an uncolored base paper, it is possible to manufacture a heat exchange element that is made with a colored paper.
Patent Document 1: Japanese Patent Application Laid-open No. H11-189999 (cf. paragraphs 0028 and 0032)
Patent Document 2: Japanese Patent Application Laid-open No. H10-153398 (cf. paragraph 0022)
Patent Document 3: Japanese Patent Application Laid-open No. 11-153399 (cf. paragraphs 0018 and 0022)

### DISCLOSURE OF INVENTION

### PROBLEM TO BE SOLVED BY THE INVENTION

Many types of heat exchange elements have been developed such as moisture-resistant-type heat exchange elements that are used in environments in which condensation is likely to occur such as indoor pools, bathing rooms, and places having a cold climate; sensible heat exchange elements that exchange only sensible heat; total heat exchange elements that exchange both sensible heat and latent heat; high-performance heat exchange elements that have high heat exchange efficiency for latent heat; general-use heat exchange elements that have reduced costs. As a result, problems are likely to occur where a type of heat exchange element different from the heat exchange element that is supposed to be used may be used by mistake in.a process of exchanging the heat exchange element included in a heat exchange apparatus that is already installed or in a process of assembling a new heat exchange apparatus.

For instance, in the case where the partition members and the spacing members are colored in desired colors by using any of the methods described in Patent Documents 1 to 3, it is easy to identify the heat exchange elements according to the types thereof. Thus, it is easy to prevent the problem described above. However, when the partition members and the spacing members are manufactured with colored papers, the manufacturing cost of the heat exchange element becomes higher, because colored papers are more expensive than uncolored papers. Further, as for the method by which a colored coating is used in the process of applying moisture releasing/absorbing powder onto an uncolored base paper, although this method can be applied to total heat exchange elements, it is not possible to apply this method to sensible heat exchange elements, because sensible heat exchange elements do not require moisture releasing/absorbing powder.

In view of the circumstances described' above, it is an object of the present invention to obtain a heat exchange element having a desired color arrangement that is easy to manufacture at a low cost, regardless of the type of the heat exchange element. Further, it is another object of the present invention to obtain a manufacturing method of a heat exchange element having a desired color arrangement that is easy to manufacture at a low cost, regardless of the type of the heat exchange element. Furthermore, it is yet another object of the present invention to obtain a heat exchange ventilator that includes a low-cost heat exchange element having a desired color arrangement.

### MEANS FOR SOLVING PROBLEM

A heat exchange element according to the present invention that achieve the object is a heat exchange element that has a stacked-layer structure in which sheet-like partition members and spacing members are stacked alternately, while the spacing members are joined with the partition members so as to form air flow passages together with the partition members, the stacked-layer structure including a plurality of adhesive layers that cause the partition members to be each joined with a corresponding one of the spacing members, wherein the plurality of adhesive layers include one or more colored adhesive layers.

A manufacturing method of a heat exchange element according to the present invention that achieve the object is a manufacturing method of a heat exchange element that has a stacked-layer structure in which sheet-like partition members and spacing members are stacked alternately, while the spacing members are joined with the partition members so as to form air flow passages together with the partition members, the stacked-layer structure including a plurality of adhesive layers that cause the partition members to be each joined with a corresponding one of the spacing members, the manufacturing method includes a unit manufacturing step of obtaining a plurality of element structuring units in each of which a different one of the partition members and the corresponding one of the spacing members are joined together by using an adhesive; and a layer stacking step of joining the element structuring units together by using an adhesive and obtaining the heat exchange element in which the plurality of element structuring units are stacked in a manner of layers, wherein an adhesive that forms a colored adhesive layer is used as the adhesive at one or both of the unit manufacturing step and the layer stacking step.

A heat exchange ventilator according to the present invention that achieve the object is a heat exchange ventilator that includes a supply ventilation passage; an exhaust ventilation passage that intersects the supply ventilation passage; a supply air blower disposed within the supply ventilation passage; an exhaust air blower disposed within the exhaust ventilation passage; and a heat exchange element disposed in a part at which the supply ventilation passage intersects the exhaust ventilation passage, wherein the heat exchange element has a stacked-layer structure in which sheet-like partition members and spacing members are stacked alternately, while the spacing members are joined with the partition members so as to form air flow passages together with the partition members, the stacked-layer structure includes a plurality of adhesive layers that cause the partition members to be each joined with a corresponding one of the spacing members, and the plurality of adhesive layers include one or more colored adhesive layers.

A heat exchange ventilator according to the present invention that achieve the object is a heat exchange ventilator that includes a housing having a ventilation passage therein of which two ends are open to an outside thereof; a separating plate that is provided on the both ends of the ventilation passage and divides the ventilation passage into an supply ventilation passage and an exhaust ventilation passage; a rotor that is disposed within the housing; and a rotor driving unit that causes the rotor to rotate, the rotor including a heat exchange element that is configured in the form of a wheel, wherein the heat exchange element has a stacked-layer structure in which sheet-like partition members and spacing members are stacked alternately, while the spacing members are joined with the partition members so as to form air flow passages together with the partition members, the stacked-layer structure includes a plurality of adhesive layers that cause the partition members to be each joined with a corresponding one of the spacing members, and the plurality of adhesive layers include one or more colored adhesive layers.

### EFFECT OF THE INVENTION

The heat exchange element according to the present invention includes the colored adhesive layers. Thus, regardless of the type of the heat exchange element, e.g., a moisture-resistant type, a sensible heat type, a total heat type, a high-performance type, or a general-use type, it is possible to obtain a heat exchange element having a desired color arrangement by selecting, as necessary, the color of the colored adhesive layers. In addition, compared to an example in which a heat exchange element having a desired color arrangement is manufactured by using a colored paper, it is possible to reduce the manufacturing cost.

Thus, according to the present invention, it is easy to obtain a low-cost heat exchange element having the desired color arrangement. Because it is possible to color-code heat exchange elements according to the types thereof at a low cost, it is easy to prevent the problem where a type of heat exchange element different from the heat exchange element that is supposed to be used may be used by mistake in a process of, for example, exchanging the heat exchange element included in a heat exchange apparatus that is already installed or in a process of assembling a new heat exchange apparatus.

When the manufacturing method of a heat exchange element according to the present invention is used, it is possible to easily manufacture the heat exchange element according to the aspect of the present invention described above. Because the heat exchange ventilator according to an aspect of the present invention includes the heat exchange element according to the aspect of the present invention described above, it is possible to easily obtain a heat exchange ventilator including a low-cost heat exchange element having a desired color arrangement.

### BRIEF DESCRIPTION OF DRAWINGS

[Fig. 1] Fig. 1 is a schematic partial cross-sectional plan view illustrating an example of a heat exchange ventilator.
[Fig. 2] Fig. 2 is a schematic perspective view illustrating a total heat exchange element included in the heat exchange ventilator shown in Fig. 1.
[Fig. 3] Fig. 3 is a schematic flowchart illustrating an example of a unit manufacturing step that is performed to manufacture the total heat exchange element shown in Fig. 2.
[Fig. 4] Fig. 4 is a schematic flowchart illustrating an example of a layer stacking step that is performed to manufacture the total heat exchange element shown in Fig. 2.
[Fig. 5] Fig. 5 is a schematic drawing illustrating an example of equipment that is used to manufacture a long element structuring unit member one after another at the unit manufacturing step shown in Fig. 3.
[Fig. 6] Fig. 6 is a schematic drawing illustrating an example of equipment that is used to apply an adhesive to an element structuring unit included in a total heat exchange element.
[Fig. 7] Fig. 7 is a schematic perspective view illustrating another example of a heat exchange ventilator.
[Fig. 8] Fig. 8 is a schematic partial cross-sectional plan view for explaining a positional relationship between a housing and a rotor in the heat exchange ventilator shown in Fig. 7.
[Fig. 9] Fig. 9 is an enlarged schematic perspective view illustrating a part of the total heat exchange element included in the heat exchange ventilator shown in Fig. 7.

### EXPLANATIONS OF LETTERS OR NUMERALS

- 3: supply ventilation passage
- 5: exhaust ventilation passage
- 10: housing
- 13: supply air blower
- 15: exhaust air blower
- 21: partition member
- 25: spacing member
- 30a to 30f: element structuring units
- 37a, 37b: adhesive layers
- 40: total heat exchange element
- 50: heat exchange ventilator
- 105: ventilation passage
- 105a: supply ventilation passage
- 105b: exhaust ventilation passage
- 110: housing
- 115a, 115b: separating plates
- 121: partition member
- 125: spacing member
- 130a to 130c: element structuring units
- 137a, 137b: adhesive layers
- 140: total heat exchange element
- 141: driving belt
- 143: motor
- 145: rotor driving unit
- R: rotor
- P: fluid flow passage

### BEST MODE(S) FOR CARRYING OUT THE INVENTION

Exemplary embodiments of a heat exchange element, a manufacturing method thereof, and a heat exchange ventilator of the present invention will be explained in detail, with reference to the accompanying drawings. The present invention is not limited to the exemplary embodiments explained below.

### First Embodiment

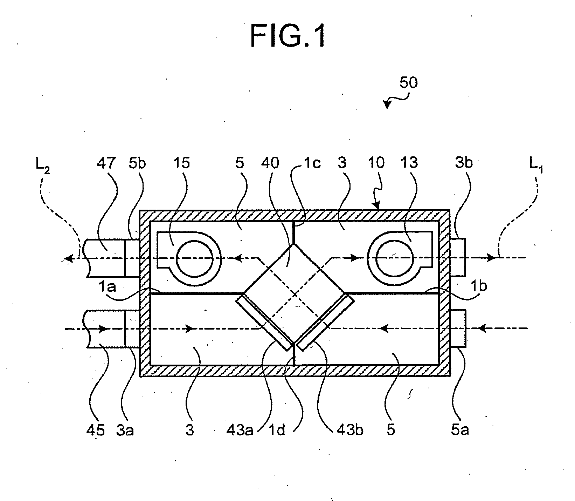

Fig. 1 is a schematic partial cross-sectional plan view illustrating an example of a heat exchange ventilator. A heat exchange ventilator 50 shown in Fig. 1 includes: a housing 10, an supply air blower 13 and an exhaust air blower 15 that are provided in the housing 10; a total heat exchange element 40 and two filters 43a and 43b that are also provided in the housing 10; an air-supply-purpose air pipe 45 and an air-exhaust-purpose air pipe 47 that are connected to the housing 10.

Four partition walls 1a to 1d are provided within the housing 10. The four partition walls 1a to 1d define an supply ventilation passage 3 and an exhaust ventilation passage 5 that intersect each other at a center part of the housing 10. An air-supply-purpose intake 3a is provided on the entrance side of the supply ventilation passage 3 on the housing 10, whereas an air-supply-purpose outlet 3b is provided on the exit side of the supply ventilation passage 3. Similarly, an air-exhaust-purpose intake 5a is provided on the entrance side of the exhaust ventilation passage 5 on the housing 10, whereas an air-exhaust-purpose outlet 5b is provided on the exit side of the exhaust ventilation passage 5.

The supply air blower 13 is provided on the air-supply-purpose outlet 3b side of the supply ventilation passage 3 so that the supply air blower 13 generates an air flow that travels from the air-supply-purpose intake 3a via the supply ventilation passage 3 toward the air-supply-purpose outlet 3b. Also, the exhaust air blower 15 is provided on the air-exhaust-purpose outlet 5b side of the exhaust ventilation passage 5 so that the exhaust air blower 15 generates an air flow that travels from the air-exhaust-purpose intake 5a via the exhaust ventilation passage 5 toward the air-exhaust-purpose outlet 5b. In Fig. 1, the air flow that is generated by the supply air blower 13 is indicated with a dashed two-dotted line L₁, whereas the air flow that is generated by the exhaust air blower 15 is indicated with a dashed two-dotted line L₂.

The total heat exchange element 40 is disposed in a part of the housing 10 at which the supply ventilation passage 3 intersects the exhaust ventilation passage 5 and exchanges sensible heat as well as latent heat between the air flow flowing in the supply ventilation passage 3 and the air flow flowing in the exhaust ventilation passage 5. To prevent dust from flowing into the total heat exchange element 40, the filter 43a is provided at a portion of the supply ventilation passage 3 that is before the total heat exchange element 40, whereas the filter 43b is provided at a portion of the exhaust ventilation passage 5 that is before the total heat exchange element 40. An end of the air-supply-purpose air pipe 45 is connected to the air-supply-purpose intake 3a, whereas an end of the air-exhaust-purpose air pipe 47 is connected to the air-exhaust-purpose outlet 5b.

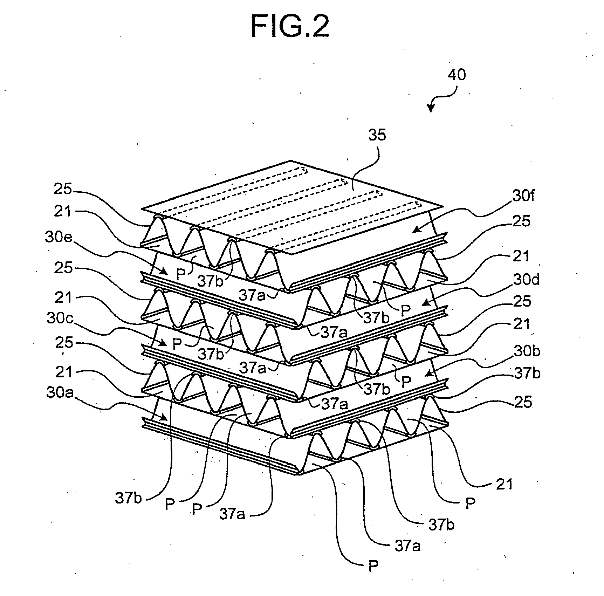

The heat exchange ventilator 50 configured as described above is installed in such a manner, for example, that the air-supply-purpose outlet 3b and the air-exhaust-purpose intake 5a are positioned indoor, whereas the other end of the air-supply-purpose air pipe 45 and the other end of the air-exhaust-purpose air pipe 47 are positioned outdoor, so that the indoor air can be air-conditioned.
The heat exchange ventilator 50 is characterized with the configuration of the total heat exchange element 40. Thus, in the following sections, the total heat exchange element 40 will be explained in detail, with reference to Fig. 2.

Fig. 2 is a schematic perspective view illustrating the total heat exchange element 40 described above. As shown in Fig. 2, the total heat exchange element 40 is of a cross-flow type having a stacked-layer structure in which sheet-like partition members 21 and corrugated spacing members 25 are stacked so as to alternate. The stacked-layer structure in the total heat exchange element 40 is formed by stacking, in the manner of layers, six element structuring units 30a to 30f and further stacking a top plate member 35 on top of the six stacked element structuring units 30a to 30f. The corrugation stripes of the spacing member 25 in any one of the element structuring units are substantially orthogonal, in a planar view, to the corrugation stripes of the spacing member 25 in another one of the element structuring units that is positioned above or below the one of the element structuring units.
In other words, the lengthwise directions of the individual ridges and grooves of the spacing member 25 in any one of the element structuring units are substantially orthogonal, in a planar view, to the lengthwise directions of the individual ridges and grooves of the spacing member 25 in another one of the element structuring units that is positioned above or below the one of the element structuring units.

The partition members 21, the spacing members 25, and the top plate member 35 are manufactured with a material of which the main ingredient is cellulose fiber (paper). The partition members 21, the spacing members 25, and the top plate member 35 are impregnated with a water-soluble moisture absorbent. In each of the element structuring units 30a to 30f, the partition member 21 and the spacing member 25 are joined together by a water-solvent-type adhesive. The element structuring units that are positioned adjacent to each other in the layer stacking direction are also joined together by a water-solvent-type adhesive. Further, the element structuring unit 30f that is provided in the uppermost position and the top plate member 35 are also joined together by a water-solvent-type adhesive.

In Fig. 2, each of the adhesive layers that cause the partition member 21 and the spacing member 25 to be joined together in the element structuring units 30a to 30f is referred to by using a reference character "37a", whereas each of the adhesive layers that cause the element structuring units positioned adjacent to each other in the layer stacking direction to be joined together and each of the adhesive layers that cause the element structuring unit 30f and the top plate member 35 to be joined together is referred to by using a reference character "37b".

Each of the adhesive layers 37a and the adhesive layers 37b has a predetermined light absorbing property. One or both of the adhesive layers 37a and the adhesive layers 37b are colored so as to be in a chromatic color or an achromatic color. In other words, the total heat exchange element 40 includes colored adhesive layers. Either the adhesive layers 37a or the adhesive layers 37b may be colored. Alternatively, both the adhesive layers 37a and the adhesive layers 37b may be colored. In the case where only the adhesive layers 37a or only the adhesive layers 37b are colored, the other adhesive layers are colorless and transparent. Also, in the case where only the adhesive layers 37a or only the adhesive layers 37b are colored, it is desirable that the colored adhesive layers are in a color that is different from the colors of the partition members 21 and the spacing members 25. In the case where both the adhesive layers 37a and the adhesive layers 37b are colored, the adhesive layers 37a and the adhesive layers 37b may be colored in the same color or may be colored in mutually different colors. The color arrangements of the adhesive layers 37a and 37b (including the situation where the adhesive layers 37a or the adhesive layers 37b are colorless and transparent; hereinafter, this clarification may be omitted) are determined as necessary, according to the type of the total heat exchange element 40 (e.g., a moisture-resistant type, a high-performance type, or a general-use type) or while the designability of the total heat exchange element 40 is taken into consideration.

In the case where a water-solvent-type adhesive is used to cause the partition members 21 and the spacing members 25 to be joined together and to cause the spacing member 25 and the top plate member 35 to be joined together, the water-solvent-type adhesive permeates and diffuses into the partition members 21, the spacing members 25, and the top plate member 35 in actuality, because the partition members 21, the spacing members 25, and the top plate member 35 are made of paper. Thus, the adhesive layers 37a and 37b having the forms as shown in Fig. 2 are not actually formed. However, to make it easier to recognize the adhesive layers 37a and 37b, the adhesive layers 37a and 37b are depicted as exaggerated in Fig. 2.

In the total heat exchange element 40 configured as described above, the space between the partition member 21 and the spacing member 25 in each of the element structuring units 30a to 30f, the space between the spacing member 25 included in any one of the element structuring units 30a to 30e and the partition member 21 included in the one of the element structuring units 30b to 30f that is positioned above the element structuring unit, and the space between the spacing member 25 included in the element structuring unit 30f and the top plate member 35 are air flow passage Ps. Latent heat as well as sensible heat is exchanged between an air flow flowing through an air flow passage P that is formed in any one of the partition members 21 and another air flow flowing through another air flow passage P that is formed above the partition member 21, via the partition member 21.

Because one or both of the adhesive layers 37a and the adhesive layers 37b are colored, it is possible to assign a color arrangement according to the type of the total heat exchange element 40 (hereinafter, to "color-code the total heat exchange element 40 according to the type thereof") without lowering productivity or workability, by determining the color arrangements of the adhesive layers. 37a and 37 in advance according to the type of the total heat exchange element 40. When the total heat exchange element 40 is color-coded in this manner, it is easy to prevent the problem where a type of total heat exchange element different from the total heat exchange element 40 that is supposed to be used may be used by mistake in a process of, for example, exchanging the total heat exchange element 40 included in a heat exchange apparatus 50 (cf. Fig. 1) that is already installed or in a process of assembling a new heat exchange apparatus 50. In addition, it is also easy to improve the designability of the total heat exchange element 40.

Further, it is possible to prepare, at a relatively low cost, the adhesives used for forming the adhesive layers 37a and 37b, by adding, for example, a desired coloring agent (e.g., a water-soluble dye or a water-dispersible pigment) to a water-solvent-type adhesive such as a vinyl acetate based emulsion type adhesive, an ethylene-vinyl acetate copolymer based emulsion type' adhesive, or a acryl-vinyl acetate based emulsion type adhesive or to a water-solvent polymer compound such as a polyvinyl alcohol or poly acrylic acid. Thus, it is possible to make the manufacturing cost of the total heat exchange element 40 lower than the example in which a total heat exchange element having a desired color arrangement is manufactured by using a colored paper.

Furthermore,'by determining the color arrangements of the adhesive layers 37a and 37b so that the adhesive layers 37a and 37b exhibit a chromatic color or an achromatic color, it becomes easy to visually check the degree of the permeation and the diffusion of the adhesive layers 37a and 37b into the partition members 21 and the spacing members 25. Thus, it also becomes easy to visually check how the partition members 21 and the spacing members 25 are joined together and how the spacing member 25 and the top plate member 35 are joined together. As a result, it becomes easy to find problems at an early stage, the problems being, for example, an unsatisfactory adhesion occurring during the manufacturing process of the total heat exchange element 40. In the case where a total heat exchange element is manufactured by using partition members, spacing members, and a top plate member that have been colored in advance, it is difficult to analyze whether an unsatisfactory adhesion that is discovered after the total heat exchange element is shipped has occurred in the manufacturing process or has occurred due to the use of the total heat exchange element. In contrast, in the case where'the total heat exchange element 40 is manufactured by using the colored adhesive, it becomes easy to analyze the cause of the unsatisfactory adhesion.

The coloring agent used to color the adhesive may be selected as necessary depending on the light absorbing properties that the adhesive layers 37a and 37b are required to have and/or the composition of the adhesive to which the coloring agent is to be added or the like, while ensuring that the property of the adhesive does not change.

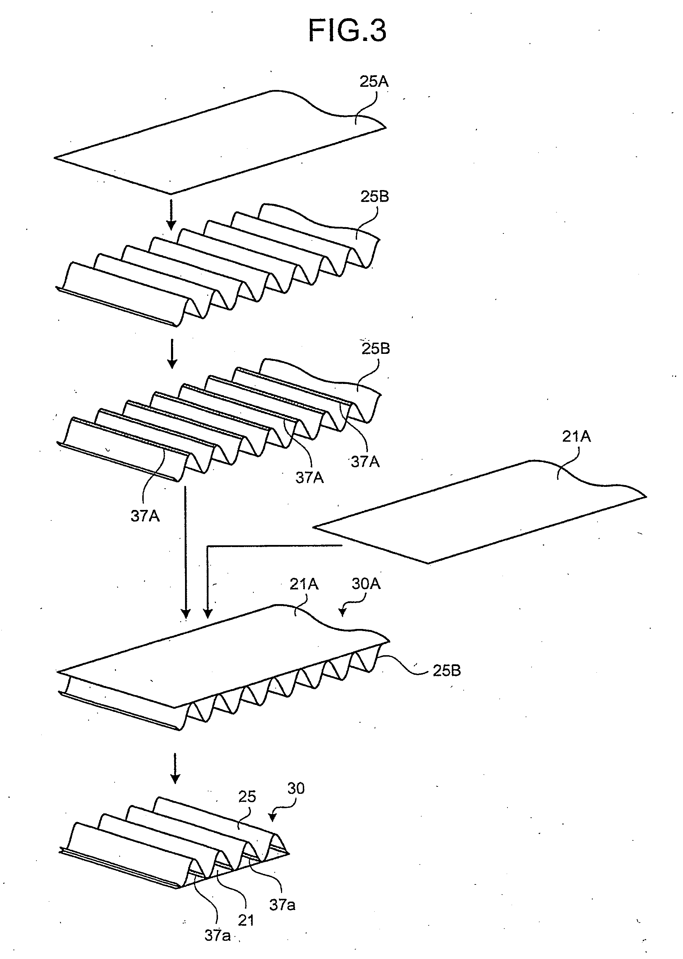

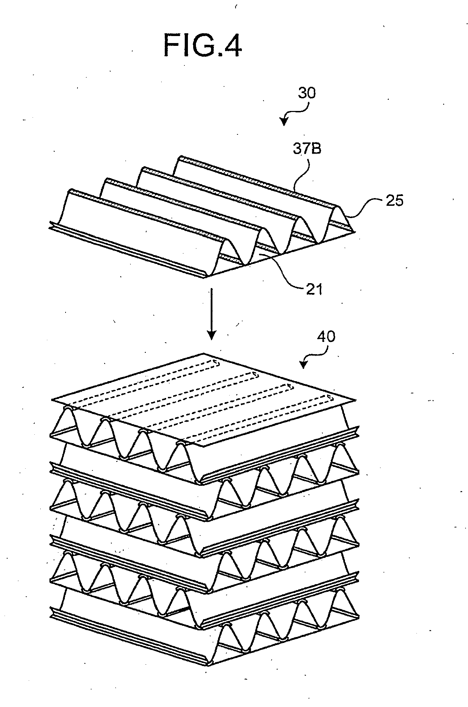

It is possible to manufacture the total heat exchange element 40 that achieves the technical advantageous effect as described above by using a method that includes, for example, a unit manufacturing step of obtaining a plurality of element structuring units in each of which a partition member and a spacing member are joined together by using an adhesive; and a layer stacking step of joining the element structuring units together by using an adhesive and obtaining a heat exchange element in which the plurality of element structuring units are stacked in the manner of layers. In this situation, at one or both of the unit manufacturing step and the layer stacking step, the adhesive that forms the colored adhesive layer (which denotes the adhesive layer after being hardened) is used. Next, each of these steps will be explained in detail, with reference to Figs. 3 and 4.

Fig. 3 is a schematic flowchart illustrating an example of the unit manufacturing step that is performed to manufacture the total heat exchange element 40 shown in Fig. 2. The unit manufacturing step shown in Fig. 3 includes a first sub-step SP₁ and a second sub-step SP₂.

At the first sub-step SP₁, first, a long material 25A used for making the spacing members 25 (cf. Fig. 2) is shaped into a corrugated form so as to obtain a long corrugated shaped product 25B. A water-solvent-type adhesive 37A is applied to the corrugated ridge portions on one side of the corrugated shaped product 25B. A water-soluble moisture absorbent such as an alkali metal salt or an.alkali metal salt has been dissolved into the adhesive 37A. Further, it is also acceptable to have a desired coloring agent added to the adhesive 37A. After that, a long material 21A used for making the partition members 21 (cf. Fig. 2) is disposed on top of the corrugated shaped product 25B, so that the material 21A and the corrugated shaped product 25B are joined together,by the adhesive 37A, so as to obtain a long element structuring unit member 30A.

At the second sub-step SP₂, the element structuring unit member 30A is cut into pieces of a predetermined size, so as to obtain a plurality of element structuring units 30 each of which includes a partition member 21, the spacing member 25, and a plurality of adhesive layers 37a that cause the partition member 21 and the spacing member 25 to be joined together. The obtained element structuring units 30 correspond to the element structuring units 30a to 30f shown in Fig. 2.

Fig. 4 is a schematic flowchart illustrating an example of the layer stacking step that is performed to manufacture the total heat exchange element 40 shown in Fig. 2. At the layer stacking step shown in Fig. 4, first, a water-solvent-type adhesive 37B is applied to the corrugated ridge portions of the spacing members 25 included in the element structuring unit 30 and another element structuring unit (not shown) that have been manufactured at the unit manufacturing step. A water-soluble moisture absorbent such as an alkali metal salt or an alkali metal salt has been dissolved into the adhesive 37B. In the case where no coloring agent has been added to the adhesive 37A described above, a desired coloring agent is added to the adhesive 37B. Conversely, in the case where a coloring agent has been added to the adhesive 37A described above, a coloring agent may be or may not be added to the adhesive 37B. In the case where a coloring agent is added to the adhesive 37B, it is acceptable to add a coloring agent that yields the same color as the adhesive 37A to the adhesive 37B. It is also acceptable to add a coloring agent that yields a different color from the adhesive 37A to the adhesive 37B.

Subsequently, the element structuring units to which the adhesive 37B has been applied are sequentially stacked in the manner of layers, while determining the orientation of each of the element structuring units in such a manner that the corrugation stripes of the spacing member 25 in any one of the element structuring units are substantially orthogonal, in a planar view, to the corrugation stripes of the spacing member 25 in another one of the element structuring units that is positioned above or below the one of the element structuring units. As a result, the element structuring units that are positioned adjacent to each other in the layer stacking direction are joined together by the adhesive 37B. After that, the top plate member 35 (cf. Fig. 2) is joined on top of the spacing member 25 included in the uppermost element structuring unit by using the adhesive 37B described above. When the top plate member 35 has been joined, the total heat exchange element 40 shown in Fig. 2 is obtained.

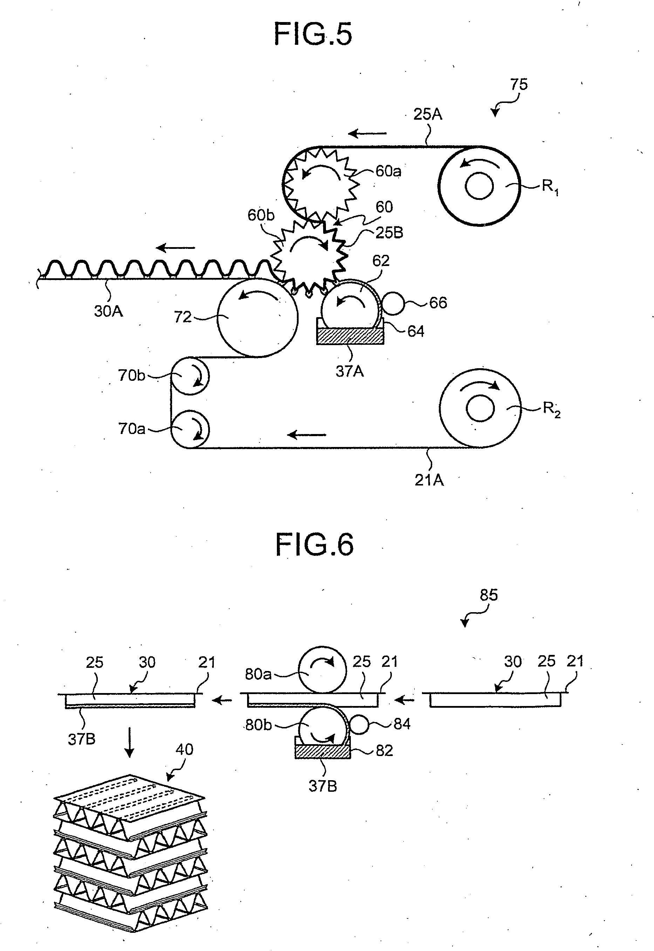

At the unit manufacturing step described above, it is possible to manufacture the long element structuring unit member 30A (cf. Fig. 3) one after another, by using, for example, equipment as shown in Fig. 5. In this situation, the long material used for making the spacing members and the long material used for making the partition members are shaped in rolls in advance, respectively.

Fig. 5 is a schematic drawing illustrating an example of the equipment that is used to manufacture.the long element structuring unit member one after another. Equipment 75 shown in Fig. 5 is a single-facer apparatus. The single-facer apparatus shapes the long material 25A used for making the spacing members into a roll R₁ in advance, and also shapes the long material 21A used for making the partition members into a roll R₂ in advance.
The material 25A that is pulled out of the roll R₁ is first forwarded to a corrugator 60 including a pair of corrugating rollers 60a and 60b. The corrugator 60 is configured so that the upper corrugating roller 60a in the form of a gear and the lower corrugating roller 60b also in the form of a gear rotate while being engaged with each other. The material 25A is continuously shaped into the corrugated form at the position where the corrugating roller 60a and the corrugating roller 60b are engaged with each other. As a result, the long corrugated shaped product 25B is manufactured one after another.

The corrugated shaped product 25B is forwarded in a predetermined direction by the lower corrugating roller 60b, and the adhesive 37A is applied to the corrugated shaped product 25B by an application roller 62 while the corrugated shaped product 25B is being forwarded. The adhesive 37A is stored in an adhesive tank 64, while the circumferential surface of the application roller 62 is partially immersed in the adhesive tank 64. Also, the circumferential surface of the application roller 62 is substantially in contact with the apex portions of the gear teeth of the lower corrugating roller 60a. With this arrangement, when the application roller 62 rotates in a predetermined direction, the adhesive 37A adheres to the circumferential surface of the application roller 62, so that the adhesive 37A is further applied to the one side of the corrugated shaped product 25B. To avoid a situation in which the excessive adhesive 37A adheres to the circumferential surface of the application roller 62, a squeezing roller 66 is disposed near the application roller 62.

The material 21A that is pulled out of the roll R₂ is introduced to a press roller 72 by two guide rollers 70a and 70b. The press roller 72 is disposed so that the circumferential surface thereof is substantially in contact with'the apex portions of the gear teeth of the lower corrugating roller 60a. During the process in which the press roller 72 forwards the material 21A in a predetermined direction, the material 21A is pressed so as to be in contact with the corrugated shaped product 25B. Because the adhesive 37A has been applied to the corrugated shaped product 25B as described above, the material 21A pressed so as to be in contact with the corrugated shaped product 25B is pasted onto the corrugated shaped product 25B by the adhesive 37A. As a result, the long element structuring unit member 30A used for making the element structuring units is manufactured one after another. The corrugating rollers 60a and 60b and the press roller 72 are heated to a predetermined temperature of, for example, approximately 150°C or higher so that it is easy to adjust the shape of the corrugated shaped product 25B. In Fig. 5, the rotation directions of the rollers and the transport directions of the materials 21A and 25A are indicated with arrows drawn with solid lines.

After that, by cutting the element structuring unit member 30A into pieces of the predetermined size while using a cutting machine, the element structuring units 30 (cf. Fig. 3) are manufactured one after another. To obtain the total heat exchange element by stacking, in the manner of layers, the plurality of element structuring units 30 that have been manufactured in this manner, it is possible to apply the adhesive 37B (cf. Fig. 4) to the element structuring units by using, for example, equipment of which a schematic drawing is shown in Fig. 6.

The equipment shown in Fig. 6 includes a pair of rollers 80a and 80b, an adhesive tank 82 in which the adhesive 37B described above is stored, a squeezing roller 84 that is disposed near the roller 80b, and a transporting device (not shown). Each of the element structuring units 30 is transported to the pair of rollers 60a and 60b by the transporting device, while being positioned in such a manner that the partition member 21 is on top, while the spacing member 25 is on the bottom. The adhesive 37B is applied to each of the element structuring units 30 at the pair of rollers 60a and 60b. The plurality of element structuring units 30 are transported to the pair of rollers 60a and 60b at predetermined intervals.

Of the pair of rollers 80a and 80b, the roller 80a on the upper side functions as a transporting roller that transports each of the element structuring units 30 in the predetermined direction. A circumferential surface of the roller 80a on the lower side is partially immersed in the adhesive tank 82 and functions as an application roller for applying the adhesive 37B to each of the element structuring units 30. When the roller 80b rotates in the predetermined direction, the adhesive 37B adheres to the circumferential surface of the roller 80b, so that the adhesive 37B is further applied to the spacing member 25 included in each of the element structuring units 30. The squeezing roller 84 is disposed near the roller 80b and removes the excessive adhesive 37B adhered to the circumferential surface of the roller 80b. By adjusting the gap between the roller 80b and the squeezing roller 84, it is possible to adjust the amount of adhesive.62 applied to each of the element structuring units 30.

The element structuring units 30 to which the adhesive 37B has been applied are stacked in the manner of layers while being oriented in the predetermined directions, as explained above, so that the element structuring units 30 that are positioned adjacent to each other in the layer stacking.direction are joined together by the adhesive 37B. After that, the top plate member 35 (cf. Fig. 2) is joined with the element structuring units 30 by using the adhesive 37B described above. As a result, the total heat exchange element 40 shown in Fig. 2 is obtained.

### Second Embodiment

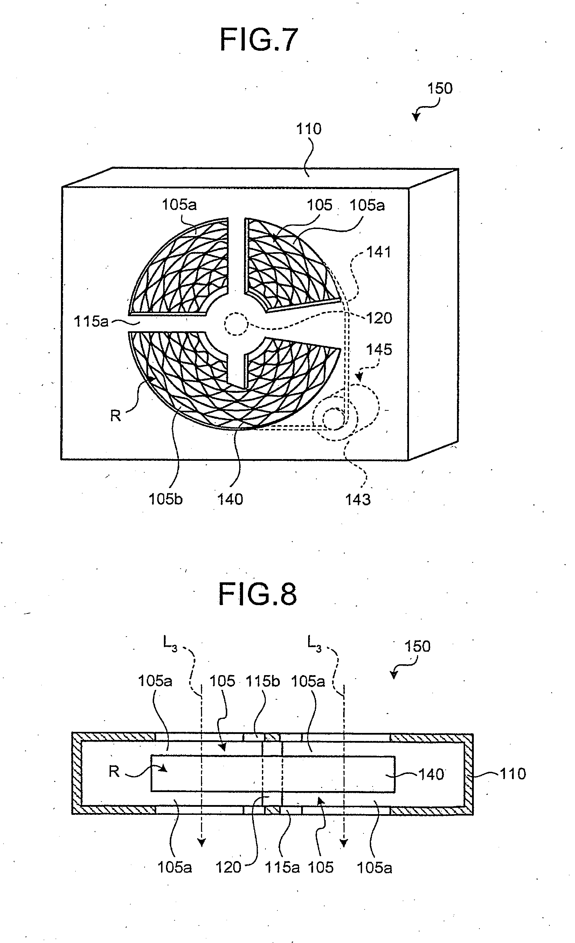

Fig. 7 is a schematic perspective view illustrating another example of a heat exchange ventilator. Fig. 8 is a schematic partial cross-sectional plan view for explaining a positional relationship between a housing and a rotor in the heat exchange ventilator shown in Fig. 7. A heat exchange apparatus 150 shown in Figs. 7 and 8 includes: a housing 110 having an ventilation passage 105 of which both ends are open to the outside; separating plates 115a and 115b that are respectively provided on the two ends of the' ventilation passage 105 and separate the ventilation passage 105 into supply ventilation passages 105a and an exhaust ventilation passage 105b; a rotor R provided within the housing 110; and a rotor driving unit 145 that causes the rotor R to rotate.

The ventilation passage 105 extends through the housing 110 in the thickness direction of the ventilation passage 105. The ventilation passage 105 is separated into the two supply ventilation passages 105a and the one exhaust ventilation passage 105b by the separating plates 115a and 115b that are disposed on the two ends of the ventilation passage 105. When the heat exchange ventilator 150 is viewed from the front, the two supply ventilation passages 105a are positioned on the left and on the right, respectively, in the upper half area of the ventilation passage 5, whereas the exhaust ventilation passage 105b is positioned in the lower half area of the ventilation passage 5.

The rotor R includes a rotation shaft 120 that is provided across the two separating plates 115a and 115b as well as a wheel-like total heat exchange element 140 that is fixed to the outer circumference of the rotation shaft 120. A driving belt 141 (cf. Fig. 7) is wound around the outer circumference of the rotor R. The driving belt 141 is also disposed around a rotation shaft of a motor 143, so as to structure the rotor driving unit 145 together with the motor 143.

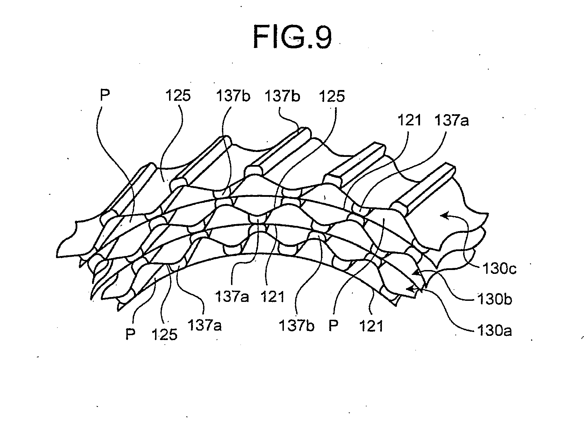

In the heat exchange ventilator 150 that is configured as described above, air flows L₃, L₃ (cf. Fig. 8) flowing through the supply ventilation passages 105a and an air flow (not shown) flowing through the exhaust ventilation passage 105b are generated when the rotor driving unit 145 causes the rotor R to rotate in a predetermined direction at a low speed. The total heat exchange element 140 exchanges sensible heat as well as latent heat between the air flows. The two separating plates 115a and 115b have substantially the same shape and substantially the same size as each other; however, to generate the two air flows, the separating plates 115a and 115b have areas of which the relative positions are slightly different from each other. The heat exchange ventilator 150 is characterized with the configuration of the total heat exchange element 140. Thus, in'the following sections, the total heat exchange element 140 will be explained in detail, with reference-to Fig. 9.

Fig. 9 is an enlarged schematic perspective view illustrating a part of the total.heat exchange element 140 shown in Fig. 7. As shown in Fig. 9, the total heat exchange element 140 is of a countercurrent type having a stacked- layer structure in which sheet-like partition members 121 and corrugated spacing members 125 are stacked in the manner of layers so as to alternate. The stacked-layer structure is formed by coaxially stacking, in the manner of layers, a plurality of ring-shaped element structuring units. In Fig. 9, three element structuring units 130a to 130c are shown. The corrugation stripes of the spacing member 125 in any one of the element structuring units are substantially parallel to the corrugation stripes of the spacing member 125 in another one of the element structuring units that is positioned above or below the one of the element structuring units.

The partition members 121 and the spacing members 125 are manufactured with a material of which the main ingredient is cellulose fiber (i.e., paper). The partition members 121 and the spacing members 125 are impregnated with a water-soluble moisture absorbent. In each of the element structuring units, the partition member 121 and the spacing member 125-are joined together by a water-solvent-type adhesive. The element structuring units that are positioned adjacent to each other in the layer stacking direction are also joined together by a water-solvent-type adhesive. In Fig. 9, each of the adhesive layers that cause the partition member 121 and the spacing member 125 to be joined together in the element structuring units is referred to by using a reference character "137a", whereas each of the adhesive layers that cause the adhesive layers by which the element structuring units positioned adjacent to each other in the layer stacking direction are joined together to be joined together is referred to by using a reference character "137b".

Each of the adhesive layers 137a and the adhesive layers 137b has a predetermined light absorbing property. One or both of the adhesive layers 137a and the adhesive layers 137b are colored so as to be in a chromatic color or an achromatic color. In other words, the total heat exchange element 140 includes colored adhesive layers. Either the adhesive layers 137a or the adhesive layers 137b may be colored. Alternatively, both the adhesive layers 137a and the adhesive layers 137b may be colored. In the case where only the adhesive layers 137a or only the adhesive layers 137b are colored, the other adhesive layers are colorless and transparent. Also, in the case where only the adhesive layers 137a or only the adhesive layers 137b are colored, it is desirable that the colored adhesive layers are in a color that is different from the colors of the partition members 121 and the spacing members 125. In the case where both the adhesive layers 137a and the adhesive layers 137b are colored, the adhesive layers 137a and the adhesive layers 137b may be colored in the same color or may be colored in mutually different colors. The color arrangements of the adhesive layers 137a and 137b (including the situation where the adhesive layers 137a or the adhesive layers 137b are colorless and transparent; hereinafter, this clarification may be omitted) are determined as necessary, according to the type of the total heat exchange element 140 (e.g., a.moisture-resistant type, a high-performance type, or a general-use type) or while the designability of the total heat exchange element 140 is taken into consideration.

In the case where a water-solvent-type adhesive is used to cause the partition members 121 and the spacing members 125 to be joined together, the water-solvent-type adhesive permeates and diffuses into the partition members 121 and the spacing members 125 in actuality, because the partition members 121 and the spacing members 125 are made of paper. Thus, the adhesive layers 137a and 137b having the forms as shown in Fig. 9 are not actually formed. However, to make it easier to recognize the adhesive layers 137a and 137b, the adhesive layers 137a and 137b are depicted as exaggerated in Fig. 9.

In the.total heat exchange element 140 configured as described above, the space between the partition member 121 and the spacing member 125 in each of the element structuring units and the space between the spacing member 125 included in any one of the element structuring units and the partition member 121 included in the one of the element structuring units that is positioned above the element structuring unit are air flow passage Ps. Latent heat as well as sensible heat is exchanged between an air flow flowing through an air flow passage P in the supply ventilation passages 105a (cf. Fig. 7 or Fig. 8) and an air flow flowing through another air flow passage P in the exhaust ventilation passage 105b, via the total heat exchange element 140.

Because one or both of the adhesive layers 137a and the adhesive layers 137b are colored, the total heat exchange element 140 described above achieves the same technical advantageous effect as achieved by the total heat exchange element 40 (cf. Fig. 2) that is explained in the first embodiment of the present invention. Accordingly, the heat exchange ventilator 150 shown in Figs. 7 and 8 achieves the same technical advantageous effect as achieved by the heat exchange ventilator 50 that is explained in the first embodiment of the present invention.

The heat exchange element, the manufacturing method thereof, and the heat exchange ventilator according to aspects of the present invention have been explained through the exemplary embodiments above. However, as mentioned above, the present invention is not limited to these exemplary embodiments. For example, as the material for the partition members and the spacing members, instead of the material of which the main ingredient is cellulose fiber (i.e., paper), it is acceptable to use a plastic sheet that allows visible light to go therethrough or a porous material such as one made with nonwoven cloth (that is not paper), metallic fibers, glass fibers, or the like. It is also acceptable to cause a non-water-soluble moisture absorbent (e.g., granular solids of silica gel, a strongly acidic ion-exchange resin, or a strongly basic ion-exchange resin) to adhere to any of the materials described above, as necessary.

In the case where paper is used as the material for the partition members and the spacing members, it is acceptable to add a flame retardant or other types of chemicals to the paper as necessary. By causing the partition members made of paper and the spacing members made of paper to be joined together by using a water-solvent-type adhesive in which a water-soluble flame retardant such as a guanidine salt (e.g., guanidine sulfamate) or another water-soluble chemical has been dissolved, it is possible to add the flame retardant or said another chemical to the partition members and the spacing members by applying the adhesive thereto. As the adhesive, it is also acceptable to use other types of adhesive (e.g., an organic-solvent-type adhesive), instead of the water-solvent-type adhesive.

It is possible to determine, as necessary, how the colored adhesive layers should be distributed in each heat exchange element. For example, in the case where one partition member and one spacing member are joined together by a plurality of adhesive layers, it is acceptable to arrange the plurality of adhesive layers to be in mutually the same color (including colorless and transparent) or to arrange the plurality of adhesive layers to be in two or more colors (including colorless and transparent). To apply the adhesive to the partition members, the spacing members, or the element structuring units, it is acceptable to use any other method (e.g., spraying the adhesive) that is suitable for the property of the adhesive, instead of using the application roller. The plurality of element structuring units that structure the heat exchange element do not necessarily have to be joined together, as long as the element structuring units that are positioned adjacent to each other in the layer stacking direction are in close contact with each other.

It is acceptable to determine, as necessary, the shapes of the spacing members, the element structuring units, and the heat exchange element, according to the application of the heat exchange element to be manufactured, the performance the heat exchange element is expected to achieve, the type of the heat exchange element, or the like. The heat exchange element may be of any type, and examples of types of heat exchange elements include: a total heat type, a sensible heat type, a moisture-resistant type, a high-performance type, a general-use type. Similarly, it is possible to determine, as necessary, the structure of the heat exchange ventilator according to, for example, the application of-the heat exchange ventilator and the performance the heat exchange ventilator is expected to achieve. It is possible to apply various changes, modifications, and combinations to the present invention, besides the exemplary embodiments described above.

## Claims

1. A heat exchange element having a stacked-layer structure in which sheet-like partition members and spacing members are stacked alternately, while the spacing members are joined with the partition members so as to form air flow passages together with the partition members, the stacked-layer structure including a plurality of adhesive layers that cause the partition members to be each joined with a corresponding one of the spacing members, wherein
the plurality of adhesive layers include one or more colored adhesive layers.

2. The heat exchange element according to claim 1, wherein the plurality of adhesive layers include a plurality of types of adhesive layers that are colored in mutually different colors.

3. The heat exchange element according to claim 1, wherein one of the air flow passages formed below one of the partition members is substantially orthogonal to another one of the air flow passages formed above the one of the partition members.

4. The heat exchange element according to claim 1, wherein one'of the air flow passages formed below one of the partition members is substantially parallel to another one of the air flow passages formed above the one of the partition members.

5. The heat exchange element according to claim 1, wherein each of the one or more colored adhesive layers exhibits a color that is predetermined according to a type of the heat exchange element.

6. A manufacturing method of a heat exchange element having a stacked-layer structure in which sheet-like partition members and spacing members are stacked alternately, while the spacing members are joined with the partition members so as to form air flow passages together with the partition members, the stacked-layer structure including a plurality of adhesive layers that cause the partition members to be each joined with a corresponding one of the spacing members, the manufacturing method comprising:
a unit manufacturing step of obtaining a plurality of element structuring units in each of which a different one of the partition members and the corresponding one of the spacing members are joined together by using an adhesive; and
a layer stacking step of joining the element structuring units together by using an adhesive and obtaining the heat exchange element in which the plurality of element structuring units are stacked in a manner of layers, wherein
an adhesive that forms a colored adhesive layer is used as the adhesive at one or both of the unit manufacturing step and the layer stacking step.

7. The manufacturing method of the heat exchange element according to claim 6, wherein the adhesive used at the unit manufacturing step and the adhesive used at the layer stacking step are mutually different colors after being hardened.

8. The manufacturing method of the heat exchange element according to claim 6, wherein
the unit manufacturing step includes:
a first sub-step of obtaining a long element structuring unit member in which a long material used for making the partition members and another long material used for making the spacing members are joined together by using the adhesive; and
a second sub-step of obtaining the element structuring units by cutting the element structuring unit member into pieces.

9. The manufacturing method of the heat exchange element according to claim 6, wherein with respect to any two of the element structuring units that are positioned adjacent to each other in a layer stacking direction, the air flow passage formed by one of the element structuring units is configured, at the layer stacking step, so as to be substantially orthogonal to the air flow passage formed by the other of the element structuring units.

10. The manufacturing method of the heat exchange element according to claim 6, wherein with respect to any two of the element structuring units that are positioned adjacent to each other in a layer stacking direction, the air flow passage formed by one of the element structuring units is configured, at the layer stacking step, so as to be substantially parallel to the air flow passage formed by the other of the element structuring units.

11. The manufacturing method of the heat exchange element according to claim 6, wherein at least one of the adhesive used at the unit manufacturing step and the adhesive used at the layer stacking step forms an adhesive layer in a color that is predetermined according to a type of the heat exchange element.

12. A heat exchange ventilator comprising:
a supply ventilation passage;
an exhaust ventilation passage that intersects the supply ventilation passage;
a supply air blower disposed within the supply ventilation passage;
an exhaust air blower disposed within the exhaust ventilation passage; and
a heat exchange element disposed in a part at which the supply ventilation passage intersects the exhaust ventilation passage, wherein
the heat exchange element has a stacked-layer structure in which sheet-like partition members and spacing members are stacked alternately, while the spacing members are joined with the partition members so as to form air flow passages together with the partition members,
the stacked-layer structure includes a plurality of adhesive layers that cause the partition members to be each joined with a corresponding one of the spacing members, and
the plurality of adhesive layers include one or more colored adhesive layers.

13. The heat exchange ventilator according to claim 12, wherein the plurality of adhesive layers include a plurality of types of adhesive layers that are colored in mutually different colors.

14. The heat exchange ventilator according to claim 12, wherein one of the air flow passages that is formed below one of the partition members is substantially orthogonal to another one of the air flow passages that is formed above the one of the partition members.

15. The heat exchange ventilator according to claim 12, wherein each of the one or more colored adhesive layers exhibits a color that is predetermined according to a type of the heat exchange element.

16. A heat exchange ventilator comprising:
a housing having a ventilation passage therein of which two ends are open to an outside thereof;
a separating plate that is provided on the both ends of the ventilation passage and divides the ventilation passage into an supply ventilation passage and an exhaust ventilation passage;
a rotor that is disposed within the housing; and a rotor driving unit that causes the rotor to rotate, the rotor including a heat exchange element that is configured in the form of a wheel, wherein
the heat exchange element has a stacked-layer structure in which sheet-like partition members and spacing members are stacked alternately, while the spacing members are joined with the partition members so as to form air flow passages together with the partition members,
the stacked-layer structure includes a plurality of adhesive layers that cause the partition members to be each joined with a corresponding one of the spacing members, and
the plurality of adhesive layers include one or more colored adhesive layers.

17. The heat exchange ventilator according to claim 16, wherein the plurality of adhesive layers include a plurality of types of adhesive layers that are colored in mutually different colors.

18. The heat exchange ventilator according to claim 16, wherein one of the air flow passages formed below one of the partition members is substantially parallel to another one of the air flow passages formed above the one of the partition members.

19. The heat exchange ventilator according to claim 16, wherein each of the one or more colored adhesive layers exhibits a color that is predetermined according to a type of the heat exchange element.
